Europäisches Patentamt

European Patent Office

Office européen des brevets

(11) Publication number: **0 262 985**
A2

# EUROPEAN PATENT APPLICATION

(21) Application number: 87308771.2

(22) Date of filing: 02.10.87

(51) Int. Cl.⁴: **B 08 B 3/02**

(30) Priority: 03.10.86 ZA 867563

(43) Date of publication of application:
06.04.88 Bulletin 88/14

(84) Designated Contracting States:
AT BE CH DE ES FR GB GR IT LI LU NL SE

(71) Applicant: **SPENCER MEREDITH KWIKWASH
INTERNATIONAL (PROPRIETARY) LIMITED**
410 Standard Plaza 440 Hilda Street
Hatfield Transvaal Province (ZA)

(72) Inventor: **Berrange, Spencer James**
5 Marchant Road
Fynnlands Natal Province (ZA)

(74) Representative: Purvis, William Michael Cameron et al
D. Young & Co. 10 Staple Inn
London WC1V 7RD (GB)

(54) Washing unit.

(57) A washing unit in the form of a washing tunnel (2) is provided for the washing of hand propelled trolleys, in particular supermarket trolleys. The unit has washing sprays (13) in one section of the tunnel with the remainder forming a drying section, and has a sump (6) for collecting wash liquid for recirculation by a pump (15) associated with the unit. The washing unit is mounted on a chassis (1) carried by roadwheels (3) and has a ramp (7) at each end of the tunnel for communicating with the supporting floor (5) of the tunnel, the ramps (7) conveniently being foldable to inoperative positions in which they form closures in the ends of the tunnel.

FIG. 1.

EP 0 262 985 A2

**Description**

"WASHING UNIT"

The invention relates to a washing unit.

Hand propelled trolleys such as supermarket trolleys used by private individuals for collecting groceries and fresh vegetables become dirty with use and, when dirty, are unappealing to a customer. Washing units for vehicles have been proposed comprising a washing station having rotating brushes and water sprays. Such an arrangement is however not appropriate for the washing of supermarket trolleys as the brushes can become damaged, dirt can become entrained in the brushes and the brush rotating mechanism constitutes an unnecessarily complex mechanism.

Washing units are generally fixed units and it is unlikely that any particular supermarket would be prepared to install such a fixed unit simply for the purpose of washing its own trolleys.

According to the invention there is provided a washing unit comprising an open ended tubular body defining a washing tunnel, a series of spray nozzles directed inwardly from peripheral regions of the tunnel, and a supply pump for supplying washing liquid under pressure to the spray nozzles characterised in that the supply pump is connected to a sump formed at the bottom of the washing tunnel whereby washing liquid is recycled by the pump and the pump and nozzle arrangement is such that jets of water emitted by the nozzles can, by themselves, effectively clean trolleys passed through the washing tunnel.

Preferably the floor of the washing tunnel is perforated and communicates directly with the sump which is located beneath the floor. Ramps are advantageously provided for communicating between ground level and the raised floor of the washing tunnel. The spray nozzles are preferably located towards one end region of the spray tunnel with the other end region serving as a drip drying zone (optionally forced air drying can also be applied if required). The ramps are advantageously hingedly or articulatedly connected to the tubular body so as to be movable between a functional ramp position and a non-functional position in which they form closures for the two ends of the washing tunnel.

The tubular body defining the washing tunnel is preferably made mobile by mounting it on a wheeled chassis, conveniently one forming a trailer, having a drawbar associated with the wheeled chassis to be foldable, removable, or retractable so as to be a movable out of the way of the ramps providing access to the tunnel, which tunnel preferably extends in the longitudinal direction i.e. the direction of travel of the mobile washing unit.

The invention is diagrammatically illustrated by way of example with reference to the accompanying drawings, in which:-

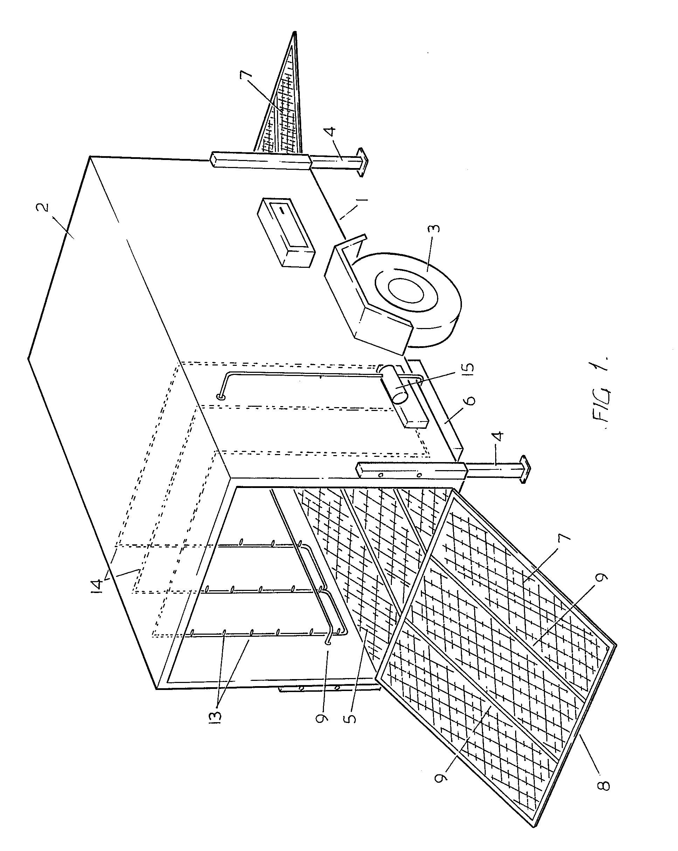

Figure 1 is a perspective view of a washing unit according to the invention in the form of a mobile trailer shown in an operative condition with a drawbar removed;

Figure 2 is a perspective view of the washing unit of Figure 1 in a condition for transportation;

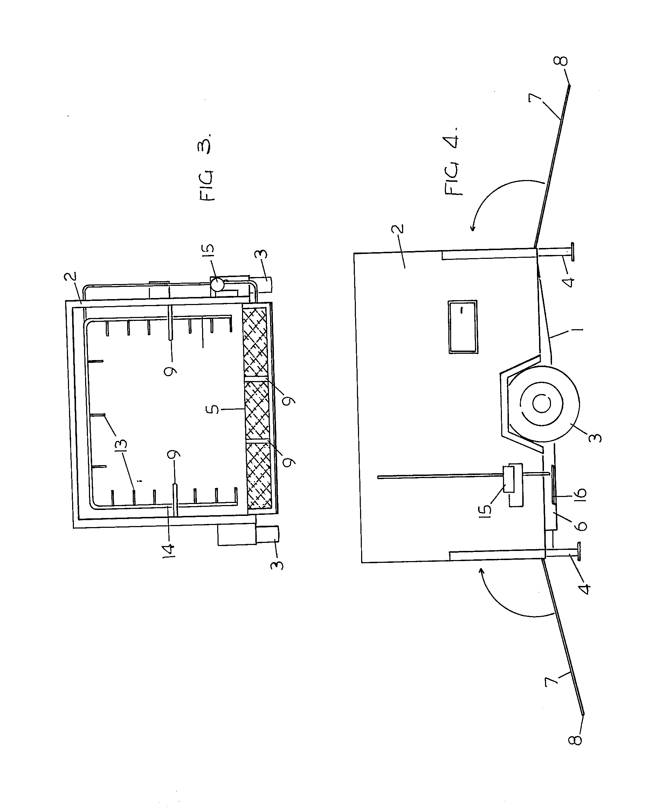

Figure 3 is an end view of the washing unit of Figures 1 and 2 in an operative condition; and

Figure 4 is a side view of the washing unit of Figures 1 and 2 in an operative condition.

Referring to the drawings, a washing unit comprises a mobile chassis 1 mounted on road wheels and supporting a tubular body 2 in the form of a washing tunnel of rectangular cross-section extending longitudinally relative to the chassis, that is to say in the direction of travel thereof.

The trailer formed by the construction of the unit described above has only one pair of road wheels 3 and has, in order to provide stability in the operative condition, a retractable leg 4 at each corner thereof. The four legs 4 are, accordingly, extended to engage the ground when the washing unit is required for use.

A floor 5 to the washing tunnel is made of expanded metal mesh and communicates with a sump 6 directly below it. The purpose of the sump 6 is to collect all wash water as will hereinafter be described.

A pair of ramps 7 is connected, one to each end of the washing tunnel to communicate with the floor 5 in the operative position and to rest with their free edges 8 on the ground so that supermarket trolleys can simply be pushed up the ramps 7 and along the floor 5 through the tunnel. If required, guides 9 for the trolley wheels or their bodies or both may be provided in order to guide a train of trolleys through the washing unit.

The ramps 7 are hingedly connected to the floor 5 at the ends thereof so that they can be swung from the above described operative position to a position in which they serve as closures for the ends of the washing tunnel.

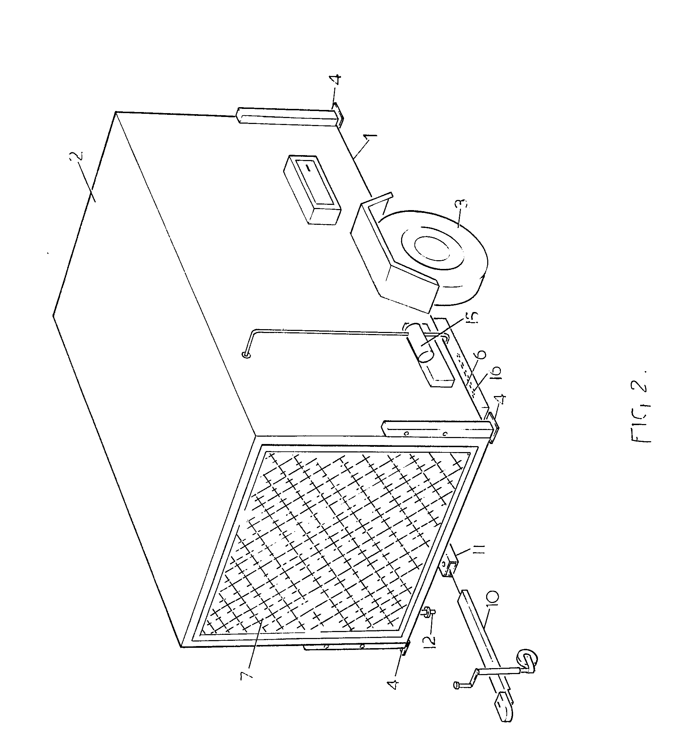

A drawbar 10 (see Figure 2) for the trailer is provided, the drawbar being removably located in a socket 11 therefor with a locking pin 12 serving to maintain it in its operative position.

Located within the washing tunnel, and arranged to occupy about one-half of the length thereof, is a plurality of spray nozzles 13 arranged to direct sprays of wash liquid transversely across the tunnel and downwardly at trolleys being moved through the tunnel. The spray nozzles 13 are connected to pipes 14 which communicate with the outlet from a pump 15 conveniently mounted on the outside of the trailer and which is connected to be supplied from wash liquid from the sump 6.

The spray nozzles 13 and the pump 15 are designed such that the pressure at which the sprays operate is adequate effectively to clean supermarket trolleys passed through the tunnel without the aid of any rotating brushes or the like. A suitable pressure has been found to be about six times atmospheric pressure.

Also provided, conveniently in the sump, and indicated by dotted lines, is a heater 16 for heating the wash liquid to a suitable temperature more effectively to clean the trolleys. Also, more effective cleaning has been found to be achieved if the nozzles have a rifled bore so as to provide a twisting motion to the sprays emitted thereby.

It will be understood that, for transport purposes, the two ramps 7 are folded upwardly to form closures to the ends of the wash tunnel and the legs 4 are retracted. The drawbar 10 is inserted into the socket 11 and retained therein by the pin 12.

When required for use at a site, the legs 4 are lowered into the operative positions, the drawbar 10 is removed, and the two ramps 7 are lowered to their operative positions. The sump is filled with wash liquid, if it is not already filled, and the heater 16 and pump 15 connected to an electrical mains power supply.

The trolleys to be washed are then simply pushed through the wash tunnel with the spray nozzles 13 in operation and drip-dry to a substantial extent in the half of the tunnel where no spray nozzles 13 are provided. The floor 5 in this half of the tunnel is nevertheless of a grid construction allowing drainage back to the sump 6 to take place.

It will be understood that numerous variations may be made to the above described embodiment without departing from the scope of the invention as defined by the appended claims. In particular, forced air drying could be provided for in a third zone of the length of the wash tunnel and the physical arrangement of the various components can be varied as required. Also, the body need not be mounted on a wheeled chassis but could be mounted on any other suitable chassis in particular on castors which would allow for easy mounting onto a trailer removably for transport.

The invention can provide a simple yet highly effective washing unit. Preferably it can be rendered easily transportable and thus is of greater application than a substantially built-in fixed washing unit.

## Claims

1. A washing unit comprising an open ended tubular body (2) defining a washing tunnel, a series of spray nozzles (13) directed inwardly from peripheral regions of the tunnel, and a supply pump (15) for supplying washing liquid under pressure to the spray nozzles (13) characterised in that the supply pump is connected to a sump (6) formed at the bottom of the washing tunnel whereby washing liquid is recycled by the pump and the pump and nozzle arrangement is such that jets of water emitted by the nozzles can, by themselves, effectively clean trolleys passed through the washing tunnel.

2. A washing unit according to claim 1, in which a floor (5) of the tunnel is perforated and communicates directly with the sump (6) which is located beneath it.

3. A washing unit according to claim 2, in which a respective ramp (7) is provided at each end of the washing tunnel to provide access to the floor (5) when the floor (5) is elevated relative to a surrounding floor surface.

4. A washing unit according to claim 3, in which the ramps (7) are hingedly attached to the body (2) or a supporting chassis (1) therefor to be movable between operative ramp defining positions and inoperative positions in which they define a closure for each end of the washing tunnel.

5. A washing unit according to claim 3 or claim 4, in which the ramps (7) are made of perforated material.

6. A washing unit according to any one of claims 3 to 5, in which the ramps (7) and the floor (5) of the tunnel are provided with upstanding guides (9) for the wheels or bodies of trolleys to be passed through the washing tunnel.

7. A washing unit according to any one of the preceding claims, in which the spray nozzles (13) are provided along one half of the length of the washing tunnel and the other half is provided for drying of the trolleys to take place by drip-drying or forced air drying.

8. A washing unit according to any one of the preceding claims, in which the body (2) is mounted on a mobile chassis (1) therefor.

9. A washing unit according to claim 8, in which the mobile chassis (1) is mounted on either roadwheels (3) or castors.

10. A washing unit according to claim 9, in which the mobile chassis (1) is mounted on a single pair of roadwheels (3) and retractable legs (4) are provided for stabilising it in an operative position.

11. A washing unit according to claim 9 or claim 10, in which the chassis is provided with a drawbar (10) for towing it, the drawbar being hingedly attached to the chassis, retractable or removable.

12. A washing unit according to any one of the preceding claims, including a heater (16) for the wash liquid.

FIG 1.

0262985

FIG. 2.

FIG. 3.

FIG. 4.